# EUROPÄISCHE PATENTSCHRIFT

(11) **EP 2 632 746 B1**
(45) Veröffentlichungstag und Bekanntmachung des Hinweises auf die Patenterteilung: **27.08.2014**
(21) Anmeldenummer: 11766933.3
(22) Anmeldetag: 27.09.2011
(51) Int. Cl.: B60G 7/00

(54) **VERFAHREN ZUR HERSTELLUNG EINES FAHRWERKBAUTEILS**
METHOD FOR PRODUCING A CHASSIS COMPONENT
PROCÉDÉ DE FABRICATION D'UN ÉLÉMENT DE CHÂSSIS

(30) Priorität: 28.10.2010 DE 102010043039
(43) Veröffentlichungstag der Anmeldung: 04.09.2013
(73) Patentinhaber: ZF Friedrichshafen AG, 88038 Friedrichshafen (DE)
(72) Erfinder: JEKEL, Wolfgang, 49448 Hüde (DE); NACHBAR, Frank, 49088 Osnabrueck (DE); FRENZEL, Hauke, Stemwede 32351 (DE); LOBO CASANOVA, Ignacio, 88046 Friedrichshafen (DE); TEMMEN, Andreas, 49143 Bissendorf (DE); STELTER, Christian, 27232 Sulingen (DE)
(86) Internationale Anmeldenummer: PCT/EP2011/066704
(87) Internationale Veröffentlichungsnummer: WO 2012/055658

(56) Entgegenhaltungen:
- EP-A1- 1 520 735
- EP-A2- 0 819 598
- DE-U1- 20 311 595
- JP-A- 6 156 032
- JP-A- 2006 307 970

## Beschreibung

Die Erfindung betrifft ein Verfahren zur Herstellung eines Fahrwerkbauteils, mit den Verfahrensschritten:
- Ausbilden einer Gelenkaufnahme an einem Strukturbauteil,
- Einsetzen einer Gelenkkartusche in die Gelenkaufnahme,
- Montieren der Gelenkkartusche zu einem Gelenk und
- festes Verbinden des Strukturbauteils mit der Gelenkkartusche durch Schweißen.

Ferner betrifft die Erfindung ein Fahrwerkbauteil mit einem Strukturbauteil, an dem eine Gelenkaufnahme ausgebildet ist, und einer in die Gelenkaufnahme eingesetzten Gelenkkartusche, die zu einem Gelenk montiert und durch Schweißen fest mit dem Strukturbauteil verbunden ist.

JP-A-06156032 zeigt ein solches Fahrwerkbauteil.

Ein Fahrwerkbauteil weist in der Regel ein Strukturbauteil und ein oder mehrere mit diesem fest verbundene Gelenke auf. Beispielsweise bildet ein solches Fahrwerkbauteil einen Zweipunktlenker, einen Dreipunktlenker oder ein Flanschgelenk, wobei die Integration des Gelenks in das Strukturbauteil im Regelfalle durch Einpressen, Anschrauben oder Annieten erfolgt. Auch ist es möglich, das Gelenk in ein einteiliges Strukturbauteilgehäuse zu integrieren. Ein solches Fahrwerkbauteil ist insbesondere mit folgenden Nachteilen behaftet: Großer Bauraumbedarf, kostenintensiv, große Schwankungen der Gelenkkennwerte, hohes Gewicht, große Anzahl an Einzelteilen, korrosionsanfällige Bereiche (z.B. an der Rollkante des Gelenks), hoher Warenbestand von Halbzeugen und hoher Logistikaufwand.

JP-A-2 006 307 970 zeigt ein Fahrwerkbauteil mit einem am Strukturbauteil anschliessenden Dichtungsbalg.

Aus der DE 603 04 709 T2 ist ein Radaufhängungsarm für ein Kraftfahrzeug bekannt, welcher einen aus gestanztem Blech gebildeten Körper umfasst, der mittels eines Kugelgelenks mit einem Radträger und mittels zweier Lager mit dem Fahrzeugaufbau verbunden ist. Das Kugelgelenk umfasst eine untere Fassung, die in ein von dem Körper gebildetes Gehäuse eingeführt wird und über einen seitlichen Vorsprung an dem seitlichen Rand des Gehäuses aufliegt, und einen Deckel, der auf die untere Fassung aufgesetzt und mit der Oberfläche des Körpers durch Laserschweißen fest verbunden wird.

Bei diesem Radaufhängungsarm können sich Toleranzen in ungünstiger Weise aufaddieren, während die untere Fassung und der Deckel an dem Körper montiert werden. Ferner müssen der Körper, die untere Fassung und ggf. der Deckel nach der Montage gereinigt werden, bevor eine Schutzbeschichtung auf diese Teile aufgebracht werden kann. Auch ist es mit einem nicht unerheblichen Aufwand verbunden, den Körper und die untere Fassung sowie ggf. den Deckel mit unterschiedlichen Beschichtungen zu versehen. Ferner ist der Schweißbereich besonders korrosionsanfällig.

Ausgehend von diesem Stand der Technik liegt der Erfindung die Aufgabe zugrunde, ein Fahrwerkbauteil der eingangs genannten Art besser vor Korrosion zu schützen.

Diese Aufgabe wird erfindungsgemäß durch ein Verfahren nach Anspruch 1 und durch ein Fahrwerkbauteil nach Anspruch 13 gelöst. Bevorzugte Weiterbildungen der Erfindung sind in den Unteransprüchen gegeben.

Bei dem erfindungsgemäße Verfahren zur Herstellung eines Fahrwerkbauteils wird
- an einem Strukturbauteil eine Gelenkaufnahme ausgebildet,
- in die Gelenkaufnahme eine Gelenkkartusche eingesetzt,
- die Gelenkkartusche zu einem Gelenk montiert und
- das Strukturbauteil mit der Gelenkkartusche durch Schweißen fest verbunden, wobei
- der durch das Schweißen gebildete Schweißbereich durch einen Dichtungsbalg abgedeckt wird.

Der Schweißbereich ist von der Korrosionsanfälligkeit her empfindlicher als die Oberfläche der durch die Gelenkkartusche und das Strukturbauteil gebildeten Fügepartner, sodass der Dichtungsbalg für das Fahrwerkbauteil einen Korrosionsschutz bildet. Der Dichtungsbalg deckt mit dem Schweißbereich die oder eine der korrosionsempfindlichsten Stellen des Fahrwerkbauteils ab, sodass der Dichtungsbalg auch dann noch einen Korrosionsschutz für das Fahrwerkbauteil bildet, wenn die Fügepartner nicht mit einer Beschichtung zum Schutz vor Korrosion versehen sind. Die Erfindung bietet insbesondere den Vorteil, dass der Schweißbereich zum Schutz vor Umwelteinflüssen nicht durch eine Beschichtung geschützt werden muss, sodass das Aufbringen einer solchen Beschichtung eingespart werden kann.

Das Strukturbauteil wird mit der Gelenkkartusche insbesondere durch eine oder wenigstens eine Schweißnaht dauerhaft fest verbunden, die durch das Schweißen gebildet wird. Vorteilhaft umfasst der Schweißbereich die oder die wenigstens eine Schweißnaht.

Gemäß einer Weiterbildung der Erfindung wird das Strukturbauteil mit der Gelenkkartusche durch Strahlschweißen, insbesondere durch Laserstrahlschweißen dauerhaft fest verbunden. Hierdurch ist eine besonders toleranzarme Verbindung des Strukturbauteils mit der Gelenkkartusche erzielbar.

Die Gelenkkartusche wird insbesondere zu dem Gelenk montiert, indem ein Gelenkinnenteil in die Gelenkkartusche eingebracht und bewegbar in dieser gelagert wird. Vorzugsweise erstreckt sich das Gelenkinnenteil durch eine Gelenkkartuschenöffnung hindurch aus der Gelenkkartusche heraus.

Bevorzugt wird die Gelenkkartusche zu dem Gelenk vormontiert. Dazu wird insbesondere das Gelenkinnenteil in die Gelenkkartusche eingebracht und bewegbar in dieser gelagert, bevor die Gelenkkartusche in die Aufnahme eingesetzt und/oder mit dem Strukturbauteil verbunden wird. Somit kann das Gelenk unabhängig von dem Strukturbauteil mit einer hohen Genauigkeit gefertigt werden. Das Gelenkinnenteil erstreckt sich bevorzugt aus der Gelenkkartusche heraus.

Bevorzugt wird die Gelenkkartusche beschichtet, insbesondere vorbeschichtet. Dazu wird die Gelenkkartusche mit einer Beschichtung versehen, insbesondere bevor die Gelenkkartusche in die Aufnahme eingesetzt und/oder das Strukturbauteil mit der Gelenkkartusche verbunden wird. Vorzugsweise wird das Strukturbauteil beschichtet, insbesondere vorbeschichtet. Dazu wird das Strukturbauteil mit einer Beschichtung versehen, insbesondere bevor die Gelenkkartusche in die Aufnahme eingesetzt und/oder das Strukturbauteil mit der Gelenkkartusche verbunden wird. Vorteilhaft sind die Beschichtungen von Gelenkkartusche und Strukturbauteil unterschiedlich. Insbesondere werden die Gelenkkartusche und das Strukturbauteil unabhängig voneinander mit der Beschichtung versehen. Vorzugsweise werden die Gelenkkartusche und das Strukturbauteil durch unterschiedliche Beschichtungsverfahren beschichtet. Die Beschichtungen dienen insbesondere zum Schutz der Gelenkkartusche und/oder des Strukturbauteils vor Umwelteinflüssen, wie z.B. vor Schmutz und Feuchtigkeit. Hierdurch kann der Korrosionsschutz für das Fahrwerkbauteil weiter verbessert werden. Vorzugsweise bilden die Beschichtungen Schutzbeschichtungen. Bevorzugt wird die Gelenkkartusche beschichtet, bevor sie zu dem Gelenk vormontiert wird.

Das Strukturbauteil wird bevorzugt durch Tauchlackieren, insbesondere durch kathodisches Tauchlackieren beschichtet. Beispielsweise wird das Strukturbauteil mit einem Lack beschichtet, der z.B. ein organisches Material umfasst. Die Gelenkkartusche wird bevorzugt galvanisch beschichtet. Beispielsweise wird die Gelenkkartusche mit einer Zink-Eisen-Beschichtung versehen.

Bevorzugt wird das an seiner Außenseite vorbeschichtete Strukturbauteil mit der an ihrer Außenseite vorbeschichteten und zu einem Gelenk vormontierten Gelenkkartusche durch das Schweißen dauerhaft fest verbunden. Da die bereits zu einem Gelenk vormontierte Gelenkkartusche mit dem Strukturbauteil verbunden wird, entfällt das Montieren von Einzelteilen des Gelenks am Strukturbauteil. Hierdurch ist bei der Integration des Gelenks in das Strukturbauteil eine Toleranzreduzierung gegenüber der DE 603 04 709 T2 erzielbar. Da ferner die Gelenkkartusche mit dem Strukturbauteil durch Schweißen verbunden wird, kann auch der Verbindungsvorgang von Gelenkkartusche und Strukturbauteil toleranzarm erfolgen. Hierdurch ist eine höhere Genauigkeit als z.B. durch Einpressen, Anschrauben oder Annieten des Gelenks in bzw. an das Strukturbauteil erzielbar. Schließlich sind die Gelenkkartusche und das Strukturbauteil bereits vorbeschichtet, sodass auf einfache Weise eine unterschiedliche Beschichtung von Gelenkkartusche und Strukturbauteil möglich ist, da die Gelenkkartusche und das Strukturbauteil unabhängig voneinander vorbeschichtet werden können. Auch wird die Handhabung der miteinander zu verbindenden Bauteile vereinfacht, da ein Monteur die Gelenkkartusche und das Strukturbauteil bedenkenlos berühren und anfassen kann, ohne eine anschließende Reinigung dieser Bauteile durchführen zu müssen, die sonst vor einem Beschichtungsvorgang aufgrund von auf die Berührung zurückzuführenden Verunreinigungen erforderlich wäre.

Das vorbeschichtete Strukturbauteil sowie die vorbeschichtete < Gelenkkartusche werden vorzugsweise für das Schweißen vorbehandelt. Insbesondere werden das vorbeschichtete Strukturbauteil sowie die vorbeschichtete und zu dem Gelenk vormontierte Gelenkkartusche für das Schweißen vorbehandelt. Bevorzugt wird die Vorbeschichtung der Gelenkkartusche, insbesondere der zu dem Gelenk vormontierten Gelenkkartusche vor dem Schweißen bereichsweise entfernt, sodass ein entschichteter Bereich an der Gelenkkartusche geschaffen wird. Vorzugsweise wird die Gelenkkartusche mit ihrem entschichteten Bereich durch das Schweißen mit dem Strukturbauteil verbunden. Das bereichsweise Entfernen der Vorbeschichtung der Gelenkkartusche erfolgt vorzugsweise durch Laserentschichten oder durch ein anderes Entschichtungsverfahren.

Insbesondere wird die Vorbeschichtung.des Strukturbauteils vor dem Schweißen bereichsweise entfernt, sodass ein entschichteter Bereich an dem Strukturbauteil geschaffen wird. Bevorzugt wird das Strukturbauteil mit seinem entschichteten Bereich durch das Schweißen mit der Gelenkkartusche verbunden. Es hat sich gezeigt, dass ein bereichsweises Entschichten der vorbeschichteten Gelenkkartusche und des vorbeschichteten Strukturbauteils mit einem geringeren Aufwand realisierbar ist, als das Verschweißen einer unbeschichteten Gelenkkartusche mit einem unbeschichteten Strukturbauteil. Dies liegt daran, dass die unbeschichteten Bauteile nach dem Verbinden in der Regel gereinigt und beschichtet werden müssen.

Gemäß einer Weiterbildung der Erfindung wird die Gelenkaufnahme an dem vorbeschichteten Strukturbauteil ausgebildet, in welche die vorbeschichtete und zu dem Gelenk vormontierte Gelenkkartusche eingesetzt wird. Insbesondere wird an dem vorbeschichteten Strukturbauteil die Gelenkaufnahme ausgebildet, in welche die vorbeschichtete und zu dem Gelenk vormontierte Gelenkkartusche vor dem Schweißen eingesetzt wird. Das bereichsweise Entfernen der Vorbeschichtung des Strukturbauteils erfolgt vorzugsweise während des Ausbildens der Gelenkaufnahme.

Bevorzugt erfolgt das Ausbilden der Gelenkaufnahme durch Strahlschneiden, insbesondere durch Laserstrahlschmelzschneiden. Da Strahlschneiden sehr toleranzarm durchgeführt werden kann, erfolgt die Ausbildung und Positionierung der Gelenkaufnahme an dem Strukturbauteil mit hoher Genauigkeit.

Bevorzugt wird die Gelenkkartusche in einer axialen Richtung in die Gelenkaufnahme eingesetzt. Die Gelenkaufnahme wird vorzugsweise mit einer runden, einer unrunden, einer viereckigen, einer rechteckigen oder einer polygonen Umfangskontur ausgebildet. Bei dieser Kontur handelt es sich insbesondere um eine Innenumfangskontur, welche die Gelenkkartusche nach ihrem Einsetzen in die Gelenkaufnahme umgibt. Die Umfangskontur der Gelenkaufnahme wird bevorzugt an die Außenumfangskontur der Gelenkkartusche angepasst. Somit wird auch die Gelenkkartusche bevorzugt mit einer runden, einer unrunden, einer viereckigen, einer rechteckigen oder einer polygonen Umfangskontur ausgebildet. Durch Ausbilden einer unrunden, mehreckigen oder polygonen Umfangskontur ist zusätzlich zu der stoffschlüssigen Schweißverbindung eine formschlüssige Verdrehsicherung realisierbar. Auch kann durch eine mehreckige oder polygone Umfangskontur eine Drehlage der Gelenkkartusche bezüglich der axialen Richtung vorgegeben werden. Eine runde Umfangskontur bildet hingegen den Vorteil, dass der Monteur die Gelenkkartusche mit einer beliebigen Drehlage bezüglich der axialen Richtung in die Gelenkaufnahme einsetzen kann. Bevorzugt ist die durch das Schweißen gebildete Verbindung zwischen der Gelenkkartusche und dem Strukturbauteil stark genug, um eine ausreichende Verdrehsicherung bilden zu können.

Die Gelenkaufnahme umfasst bevorzugt eine Ausnehmung, in welche die Gelenkkartusche eingesetzt wird. Gemäß einer Weiterbildung der Erfindung umfasst oder bildet die Gelenkaufnahme ein sich durch das Strukturbauteil hindurch erstreckendes Loch, in welches die Gelenkkartusche eingesetzt wird. Die Ausnehmung der Gelenkaufnahme wird insbesondere durch das Loch gebildet. Vorzugsweise erstreckt sich das Loch in axialer Richtung durch das Strukturbauteil hindurch. Das durchgehende Loch kann auf einfache Weise mit dem zuvor genannten Strahlschneidverfahren und daher mit einer hohen Genauigkeit ausgebildet werden.

Die Gelenkkartusche weist bevorzugt eine radiale Schulter auf, mit welcher die Gelenkkartusche beim Einsetzen in die Gelenkaufnahme in axialer Richtung an das Strukturbauteil angelegt wird. Die Schulter liegt dabei insbesondere an einem Rand der Gelenkaufnahme an. Vorzugsweise weist die Schulter in radialer Richtung eine größere Erstreckung als die Gelenkaufnahme oder das Loch auf. Das Anlegen der Schulter an das Strukturbauteil bildet eine Positionierungshilfe beim Einsetzen der Gelenkkartusche in die Gelenkaufnahme in axialer Richtung. Die Schulter ist insbesondere eine Außenschulter. Vorzugsweise ist die Schulter eine umlaufende Schulter. Bevorzugt weist die Gelenkkartusche an ihrer Außenumfangsfläche einen umlaufenden Bund auf, an dem die Schulter ausgebildet ist. Der Ausdruck "radial" kennzeichnet insbesondere eine beliebige, senkrecht zur axialen Richtung verlaufende Richtung.

Gemäß einer Weiterbildung der Erfindung ist die Außenumfangsfläche der Gelenkkartusche zumindest bereichsweise in axialer Richtung sich verjüngend ausgebildet. Beispielsweise ist die Außenumfangsfläche zumindest bereichsweise in axialer Richtung konisch ausgebildet. Die sich verjüngende oder konische Ausgestaltung der Außenumfangsfläche der Gelenkkartusche wird bevorzugt zur Zentrierung der Gelenkkartusche während des Einsetzens derselben in die Gelenkaufnahme genutzt. Somit können z.B. mögliche Toleranzen im Durchmesser der Gelenkaufnahme ausgeglichen werden.

Bevorzugt wird das Strukturbauteil mit einem oder mehreren anderen Gelenken fest verbunden. Gemäß einer Ausgestaltung der Erfindung wird das Strukturbauteil mit dem einen oder den mehreren anderen Gelenken fest verbunden, bevor die Gelenkaufnahme an dem Strukturbauteil ausgebildet wird. Insbesondere wird der Ort, an dem die Gelenkaufnahme an dem Strukturbauteil ausgebildet wird, in Abhängigkeit von der oder den Positionen des oder der mit dem Strukturbauteil fest verbundenen anderen Gelenke bestimmt. Die oder jede der Positionen wird bevorzugt durch einen Kinematikpunkt des jeweiligen anderen Gelenks charakterisiert oder gebildet. Somit wird bevorzugt der Ort, an dem die Gelenkaufnahme am Strukturbauteil ausgebildet wird, in Abhängigkeit von dem oder den Kinematikpunkten des oder der mit dem Strukturbauteil fest verbundenen anderen Gelenke bestimmt. Hierdurch ist ein deutlicher Genauigkeitsgewinn gegenüber herkömmlichen Fahrwerkbauteilen erzielbar, bei denen die Gelenkaufnähme bereits vor dem Verbinden des Strukturbauteils mit einem oder mehreren anderen Gelenken ausgebildet wird, da die Montage von jedem dieser anderen Gelenke mit Lageungenauigkeiten verbunden ist. In kinematischer Hinsicht ist somit eine deutliche Verbesserung gegenüber dem Stand der Technik möglich. Das oder die anderen Gelenke umfassen oder bilden vorzugsweise Gummi- oder Elastomerlager.

Das Gelenk ist oder bildet insbesondere ein Kugelgelenk. Bevorzugt bildet das Gelenkinnenteil einen eine Gelenkkugel aufweisenden Kugelzapfen, der mit seiner Gelenkkugel in die Gelenkkartusche eingebracht und in dieser bewegbar gelagert wird, vorzugsweise bevor das Strukturbauteil mit der Gelenkkartusche verbunden wird. Dabei wird der Kugelzapfen mit seiner Gelenkkugel insbesondere drehbar und/oder schwenkbar in der Gelenkkartusche gelagert. Bevorzugt erstreckt sich der Kugelzapfen durch die Gelenkkartuschenöffnung hindurch aus der Gelenkkartusche heraus. Gemäß einer Weiterbildung der Erfindung wird der Kugelzapfen in einer Lagerschale gleitbeweglich gelagert, die in die Gelenkkartusche eingebracht wird und vorzugsweise aus Kunstsoff besteht.

Die Wandung der Gelenkkartusche im Bereich der Gelenkkartuschenöffnung wird bevorzugt in Richtung auf den Kugelzapfen zu umgeformt, insbesondere umgebogen. In diesem Fall ist der umzuformende Bereich der Wandung vorzugsweise frei von der Vorbeschichtung der Gelenkkartusche, da andernfalls die Vorbeschichtung in diesem Bereich abplatzen könnte. Gemäß einer Alternative kann die Wandung der Gelenkkartusche im Bereich der Gelenkkartuschenöffnung aber auch in Richtung auf den Kugelzapfen zu vorgeformt sein. Gemäß einer anderen Alternative kann die Gelenkartuschenöffnung auch mit einem Verschlussring abgedeckt werden oder zumindest teilweise abgedeckt werden, der an der Gelenkkartusche befestigt wird und durch welchen hindurch sich der Kugelzapfen erstreckt. Durch das Umformen der Wandung der Gelenkkartusche im Bereich der Gelenkkartuschenöffnung sind allerdings geringere Toleranzen als mit einem Verschlussring erzielbar, da kein zusätzliches Bauteil erforderlich ist. Der Verschlussring oder der vorgeformte oder umgeformte Bereich der Wandung überdeckt die Gelenkkugel bevorzugt in axialer Richtung, sodass der Kugelzapfen in axialer Richtung an der Gelenkkartusche gesichert wird und insbesondere nicht aus dieser ausgezogen werden kann. Das Umformen der Wandung der Gelenkkartusche im Bereich der Gelenkkartuschenöffnung oder das Befestigen des Verschlussrings an der Gelenkkartusche erfolgt vorzugsweise vor dem Verbinden des Strukturbauteils mit der Gelenkkartusche.

Gemäß einer Ausgestaltung der Erfindung wird der Kugelzapfen in die Gelenkkartusche durch die Gelenkkartuschenöffnung eingebracht, insbesondere bevor die Wandung der Gelenkkartusche im Bereich der Gelenkkartuschenöffnung in Richtung auf den Kugelzapfen zu umgeformt oder der Verschlussring an der Gelenkkartusche befestigt wird.

Gemäß einer anderen Ausgestaltung der Erfindung weist die Gelenkkartusche eine der Gelenkkartuschenöffnung gegenüberliegende Montageöffnung auf, durch die der Kugelzapfen in die Gelenkkartusche eingebracht wird. Dies ist insbesondere der Fall, wenn die Wandung der Gelenkkartusche im Bereich der Gelenkkartuschenöffnung in Richtung auf den Kugelzapfen zu vorgeformt ist. Nach dem Einbringen des Kugelzapfens in die Gelenkkartusche wird die Montageöffnung bevorzugt mit einem Gehäusedeckel verschlossen, insbesondere bevor das Strukturbauteil mit der Gelenkkartusche verbunden wird.

Bei dem Dichtungsbalg handelt es sich vorzugsweise um einen Dichtungsbalg des Gelenks, der insbesondere die Gelenkkartuschenöffnung abdichtet. Vorzugsweise erstreckt sich das Gelenkinnenteil, durch den Dichtungsbalg hindurch, der vorteilhaft an dem Gelenkinnenteil dichtend angelegt wird.

Der Dichtungsbalg wird vorzugsweise an der Gelenkkartusche und/oder an dem Verschlussring und/oder an dem Strukturbauteil dichtend angelegt. Bevorzugt wird der Dichtungsbalg über die Gelenkkartusche und/oder über den Verschlussring gestülpt und dichtend an diese oder an diesen angelegt. Vorteilhaft wird der Dichtungsbalg unter Spannung an der Gelenkkartusche und/oder an dem Verschlussring angelegt. Gemäß einer Ausgestaltung der Erfindung wird der Dichtungsbalg durch einen oder mehrere Spannringe gegen die Gelenkkartusche und/oder gegen den Verschlussring gespannt. Ergänzend oder alternativ kann der Dichtungsbalg auch an der Gelenkkartusche und/oder an dem Verschlussring und/oder an dem Strukturbauteil angeklebt oder anvulkanisiert werden.

Der Dichtungsbalg besteht insbesondere aus einem flexiblen Material. Vorzugsweise besteht der Dichtungsbalg aus Elastomerwerkstoff, insbesondere aus Gummi.

Das Strukturbauteil besteht bevorzugt aus Metall. Ferner besteht die Gelenkkartusche bevorzugt aus Metall. Ist der Verschlussring vorhanden, so besteht auch dieser vorzugsweise aus Metall.

Die Erfindung betrifft ferner ein Fahrwerkbauteil, insbesondere für ein Kraftfahrzeug, mit
- einem Strukturbauteil, an dem eine Gelenkaufnahme ausgebildet ist,
- einer in die Gelenkaufnahme eingesetzten Gelenkkartusche, die zu einem Gelenk montiert und durch Schweißen fest mit dem Strukturbauteil verbunden ist, wobei
- der durch das Schweißen gebildete Schweißbereich durch einen Dichtungsbalg abgedeckt ist.

Das erfindungsgemäße Fahrwerkbauteil wird insbesondere durch das erfindungsgemäße Verfahren hergestellt und kann gemäß allen in diesem Zusammenhang beschriebenen Ausgestaltungen weitergebildet sein.

In die Gelenkkartusche ist insbesondere ein Gelenkinnenteil eingebracht und bewegbar in dieser gelagert. Vorzugsweise erstreckt sich das Gelenkinnenteil durch eine Gelenkkartuschenöffnung hindurch aus der Gelenkkartusche heraus. Der Dichtungsbalg dichtet insbesondere die Gelenkkartuschenöffnung ab. Vorzugsweise erstreckt sich das Gelenkinnenteil, durch den Dichtungsbalg hindurch, der vorteilhaft an dem Gelenkinnenteil dichtend anliegt.

Gemäß einer Weiterbildung der Erfindung ist die Gelenkartuschenöffnung mit einem Verschlussring abgedeckt oder zumindest teilweise abgedeckt, der an der Gelenkkartusche befestigt ist und durch welchen hindurch sich der Kugelzapfen erstreckt.

Der Dichtungsbalg liegt bevorzugt an der Gelenkkartusche und/oder an dem Verschlussring und/oder an dem Strukturbauteil dichtend an. Vorzugsweise ist der Dichtungsbalg über die Gelenkkartusche und/oder über den Verschlussring gestülpt und liegt dichtend an dieser oder an diesem an. Vorteilhaft liegt der Dichtungsbalg unter Spannung an der Gelenkkartusche und/oder an dem Verschlussring an. Gemäß einer Ausgestaltung der Erfindung ist der Dichtungsbalg durch einen oder mehrere Spannringe gegen die Gelenkkartusche und/oder gegen den Verschlussring gespannt. Ergänzend oder alternativ kann der Dichtungsbalg auch an der Gelenkkartusche und/oder an dem Verschlussring und/oder an dem Strukturbauteil angeklebt oder anvulkanisiert sein.

Das Gelenk ist oder bildet insbesondere ein Kugelgelenk. Bevorzugt bildet das Gelenkinnenteil einen eine Gelenkkugel aufweisenden Kugelzapfen, der mit seiner Gelenkkugel in die Gelenkkartusche eingebracht und in dieser bewegbar gelagert ist. Dabei ist der Kugelzapfen mit seiner Gelenkkugel insbesondere drehbar und/oder schwenkbar in der Gelenkkartusche gelagert. Bevorzugt erstreckt sich der Kugelzapfen durch die Gelenkkartuschenöffnung hindurch aus der Gelenkkartusche heraus. Gemäß einer Weiterbildung der Erfindung ist der Kugelzapfen in einer Lagerschale gleitbeweglich gelagert, die in die Gelenkkartusche eingebracht ist und vorzugsweise aus Kunstsoff besteht.

Die Erfindung wird nachfolgend anhand bevorzugter Ausführungsformen unter Bezugnahme auf die Zeichnung beschrieben. In der Zeichnung zeigen:
- Fig. 1: eine perspektivische Ansicht eines Fahrwerkbauteils gemäß einer ersten Ausführungsform der Erfindung,
- Fig. 2: einen Längsschnitt durch das Fahrwerkbauteil entlang der aus Fig. 1 ersichtlichen Schnittlinie A-A,
- Fig. 3: eine vergrößerte Ansicht des in Fig. 2 mit B gekennzeichneten Bereichs,
- Fig. 4: eine perspektivische Darstellung des Kugelgelenks nach Fig. 1,
- Fig. 5: das Kugelgelenk nach Fig. 4 in einem in eine Gelenkaufnahme des aus Fig. 1 ersichtlichen Strukturbauteils eingesetzten Zustand,
- Fig. 6: eine teilweise Schnittansicht des in die Gelenkaufnahme eingesetzten Kugelgelenks entlang der aus Fig. 5 ersichtlichen Schnittlinie C-C,
- Fig. 7: eine perspektivische Darstellung eines Fahrwerkbauteils gemäß einer zweiten Ausführungsform der Erfindung,
- Fig. 8: eine Draufsicht auf das aus Fig. 7 ersichtliche Strukturbauteil vor der Montage des Kugelgelenks,
- Fig. 9: eine perspektivische Darstellung des Kugelgelenks nach Fig. 7,
- Fig. 10: das Kugelgelenk nach Fig. 9 in einem in eine Gelenkaufnahme des Strukturbauteils nach Fig. 7 eingesetzten Zustand,
- Fig. 11: eine teilweise Schnittdarstellung des in die Gelenkaufnahme eingesetzten Kugelgelenks entlang der aus Fig. 10 ersichtlichen Schnittlinie D-D,
- Fig. 12: eine Schnittansicht des Kugelgelenks entlang der aus Fig. 10 ersichtlichen Schnittlinie D-D nach dem Ausbilden einer Schweißnaht,
- Fig. 13: eine Schnittansicht des Kugelgelenks entlang der aus Fig. 7 ersichtlichen Schnittlinie E-E,
- Fig. 14: eine teilweise Schnittdarstellung des in die Gelenkaufnahme eingesetzten Kugelgelenks entlang der aus Fig. 5 ersichtlichen Schnittlinie C-C oder entlang der aus Fig. 10 ersichtlichen Schnittlinie D-D, wobei das Kugelgelenk zusätzlich in einem lediglich teilweise in die Gelenkaufnahme eingesetzten Zustand ersichtlich ist,
- Fig. 15: eine Schnittansicht eines modifizierten Kugelgelenks im lediglich teilweise in die Gelenkaufnahme eingesetzten Zustand und
- Fig. 16: eine Schnittansicht des Kugelgelenks nach Fig. 15 in einem in die Gelenkaufnahme eingesetzten Zustand.

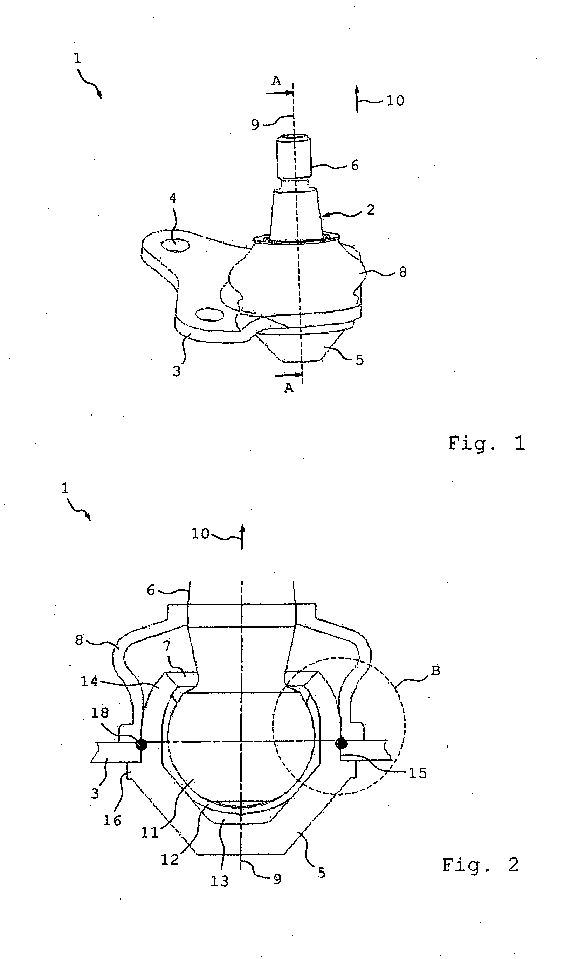

Aus den Fig. 1 bis 6 sind unterschiedliche Ansichten und Teilansichten eines Fahrwerkbauteils 1 gemäß einer ersten Ausführungsform der Erfindung ersichtlich, wobei ein Kugelgelenk 2 in ein Strukturbauteil 3 integriert ist. Das Strukturbauteil 3 ist als Flansch ausgebildet, der mit einem anderen Fahrzeugbauteil fest verbunden werden kann, wozu das Strukturbauteil 3 mit mehreren Durchgangslöchern 4 versehen ist. Das Kugelgelenk 2 umfasst eine als Gelenkgehäuse dienende Gelenkkartusche 5, in der ein Kugelzapfen 6 drehbar und schwenkbar gelagert ist. Der Kugelzapfen 6 erstreckt sich durch eine Gelenkkartuschenöffnung 7 (siehe Fig. 2) aus der Gelenkkartusche 5 heraus, wobei die Gelenkkartuschenöffnung 7 mittels eines Dichtungsbalgs 8 abgedichtet ist, durch welchen sich der Kugelzapfen 6 hindurch erstreckt. Die Längsmittelachse 9 des Kugelgelenks 2 verläuft in einer axialen Richtung 10, wobei eine Schnittansicht des Fahrwerkbauteils 1 entlang der Längsmittelachse 9 in Fig. 2 gezeigt ist.

Der Kugelzapfen 6 umfasst eine Gelenkkugel 11, die ein axiales Ende des Kugelzapfens 6 bildet und in einer Lagerschale 12 gleitbeweglich gelagert ist, die vorzugsweise aus Kunststoff besteht. Die Lagerschale 12 sitzt zusammen mit der Gelenkkugel 11 in einem Innenraum 13 der Gelenkkartusche 5 und ist in dieser gegenüber einer Verdrehung um die Längsmittelachse 9 gesichert. Ferner ist die den Innenraum 13 begrenzende Wandung 14 der Gelenkkartusche 5 im Bereich der Gelenkkartuschenöffnung 7 in Richtung auf den Kugelzapfen 6 zu umgeformt. Die Wandung 14 überdeckt somit im Bereich der Gelenkkartuschenöffnung 7 die Lagerschale 12 und die Gelenkkugel 11 in axialer Richtung 10, sodass der Kugelzapfen 6 und die Lagerschale 12 in axialer Richtung 10 in der Gelenkkartusche 5 gesichert sind. Auf ihrer der Gelenkkartuschenöffnung 7 abgewandten Seite liegt die Lagerschale 12 an der Wandung 14 an.

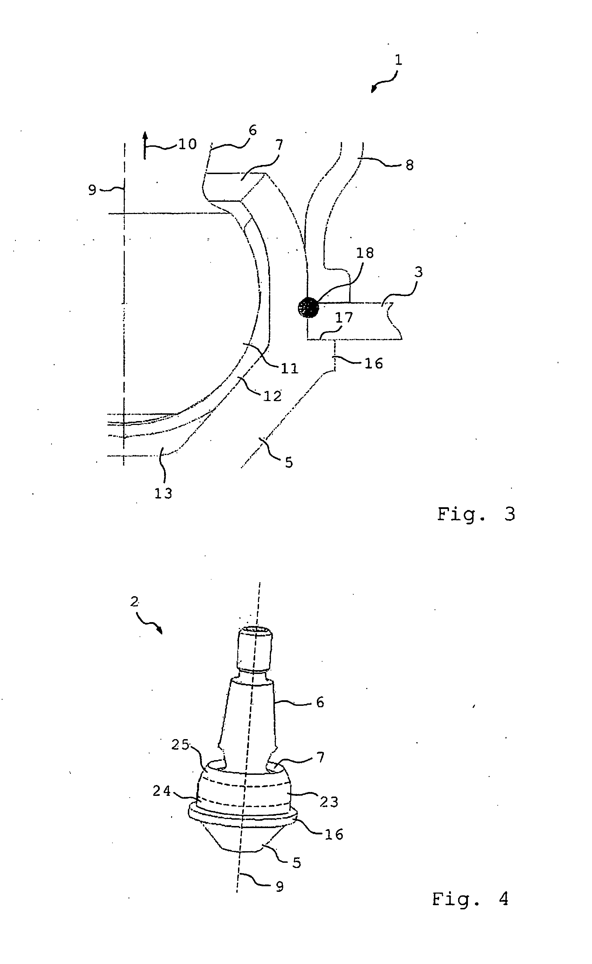

Die Gelenkkartusche 5 sitzt in einer Gelenkaufnahme 15, die als sich durch das Strukturbauteil 3 in axialer Richtung 10 hindurch erstreckendes Loch ausgebildet ist. Die Gelenkkartusche 5 umfasst einen umlaufenden, radialen Bund 16, der eine radiale Außenschulter 17 (siehe Fig. 3) definiert, mittels welcher die Gelenkkartusche 5 in axialer Richtung 10 an dem Strukturbauteil 3 anliegt. Der Bund 16 sichert somit die Gelenkkartusche 5 in axialer Richtung 10 an dem Strukturbauteil 3. Ferner ist die Gelenkkartusche 5 mit dem Strukturbauteil 3 verschweißt, wobei die zugehörige Schweißnaht mit dem Bezugszeichen 18 gekennzeichnet ist. Die Schweißnaht 18 ist vorzugsweise umlaufend ausgebildet. Eine umlaufende Ausbildung der Schweißnaht um 360° kann erfolgen, ist aber nicht zwingend erforderlich.

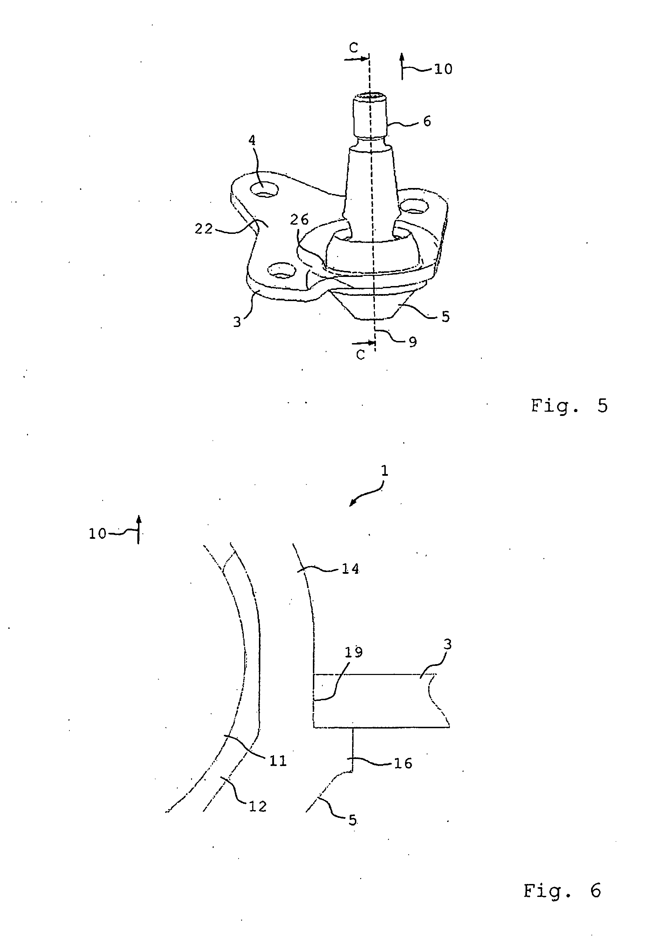

Der die Gelenkkartusche 5 umringende Dichtungsbalg 8 liegt mit einem axialen Endbereich sowohl an der Gelenkkartusche 5 als auch an dem Strukturbauteil 3 dichtend an und deckt dabei die Schweißnaht 18 ab. Ferner liegt der dem Kugelzapfen 6 umringende Dichtungsbalg 8 mit einem anderen axialen Endbereich dichtend an dem Kugelzapfen 6 an. Der Verbindungsbereich von Kugelgelenk 2 und Strukturbauteil 3 ist somit vor Umwelteinflüssen geschützt. Das Strukturbauteil 3 liegt mit seiner die Gelenkaufnahme 15 begrenzenden Umfangskontur (Lochwand) 19 (siehe Fig. 6) radial an der Gelenkkartusche 5 an, sodass radial wirkende Kräfte optimal von dem Kugelgelenk 2 auf das Strukturbauteil 3 und umgekehrt übertragen werden können.

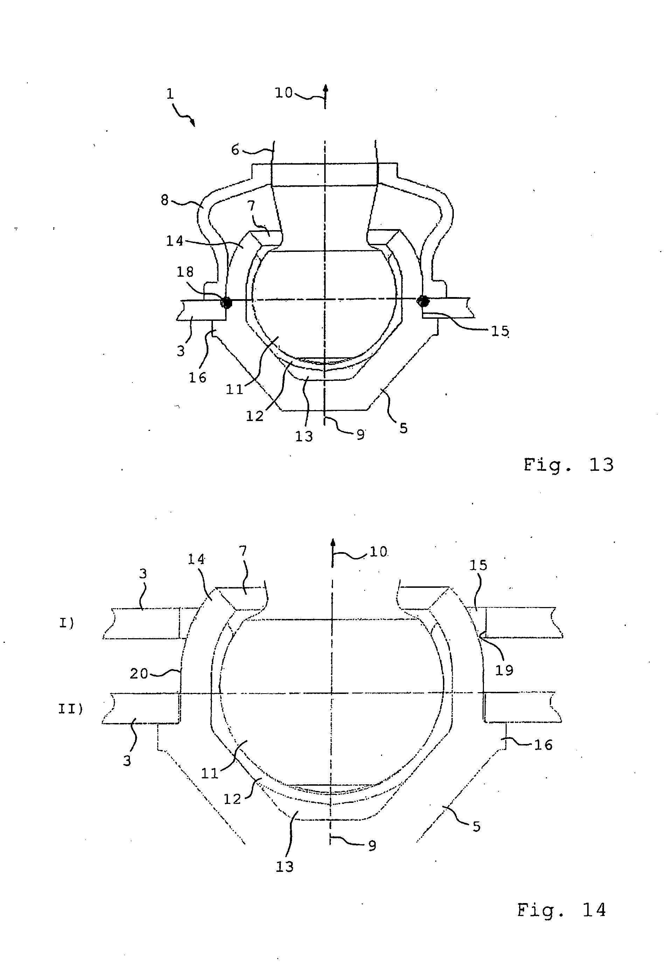

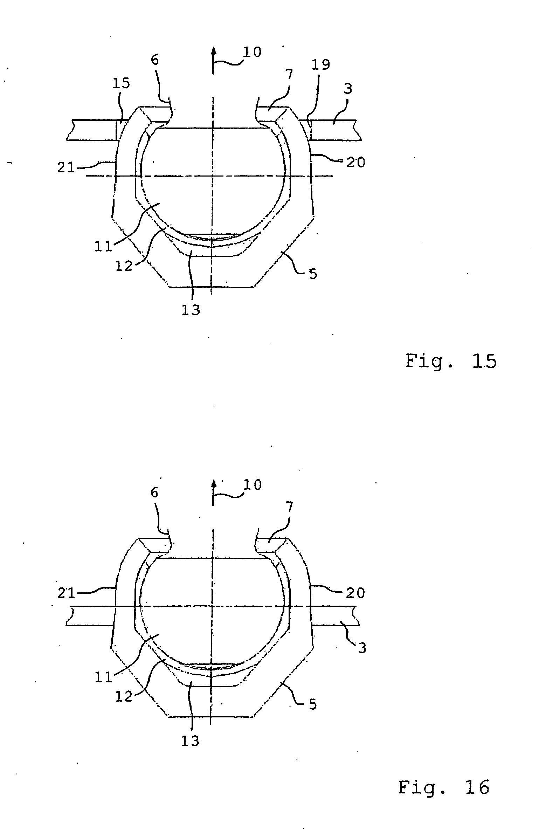

Nachfolgend wird das erfindungsgemäße Verfahren zum Herstellen des Fahrwerkbauteils 1 beschrieben. Zunächst werden das Strukturbauteil 3 und das Kugelgelenk 2 unabhängig voneinander gefertigt, welches in Einzeldarstellung aus Fig. 4 ersichtlich ist. Lediglich der Dichtungsbalg 8 ist noch nicht auf das Kugelgelenk 2 aufgebracht. Danach wird das Kugelgelenk 2 in axialer Richtung 10 mit dem Kugelzapfen 6 voran in die Gelenkaufnahme 15 eingesetzt, bis der Bund 16 mit der Schulter 17 in axialer Richtung 10 an dem Strukturbauteil 3 anliegt. Dieser Zustand ist aus den Fig. 5 und 6 ersichtlich, wobei Fig. 6 eine teilweise Schnittansicht durch das Kugelgelenk 2 im Zustand gemäß Fig. 5 entlang der Längsmittelachse 9 zeigt. Während des Einsetzens des Kugelgelenks 2 in die Gelenkaufnahme 15 des Strukturbauteils 3 wird die Gelenkkartusche 5 vorzugsweise durch den umgebogenen Bereich der Wandung 14 radial zentriert. Diese Zentrierung ist schematisch aus Fig. 14 ersichtlich, die einen Schnitt durch das Kugelgelenk 2 entlang der Längsmittelachse 9 zeigt. Da der umgeformte Bereich der Wandung 14 im Bereich der Gelenkkartuschenöffnung 7 zu einem sich in axialer Richtung 10 verjüngenden Bereich der Außenumfangsfläche 20 der Gelenkkartusche 5 führt und die Gelenkkartusche 5 mit ihrem die Gelenkkartuschenöffnung 7 begrenzenden Bereich der Wandung 14 voran in die Gelenkaufnahme 15 des Strukturbauteils 3 eingeführt wird, erfolgt durch Wechselwirkung der Umfangskontur 19 mit der Außenumfangsfläche 20 eine radiale Zentrierung der Gelenkkartusche 5. In Fig. 14 ist das Strukturbauteil 3 zweimal dargestellt. In einem ersten Zustand I ist die Gelenkkartusche 5 mit ihrem sich verjüngenden Bereich der Außenumfangsfläche 20 in der Gelenkaufnahme 15 positioniert. Durch weiteres Einschieben der Gelenkkartusche 5 in die Gelenkaufnahme 15 in axialer Richtung 10 tritt die Wechselwirkung zwischen der Umfangskontur 19 und der Außenumfangsfläche 20 auf, bis die Gelenkkartusche 5 radial in der Gelenkaufnahme 15 zentriert ist. Die Gelenkkartusche 5 wird solange in die Gelenkaufnahme 15 in axialer Richtung 10 eingeschoben, bis die Schulter 17 das Bunds 16 an dem Strukturbauteil 3 anliegt. Dieser Zustand ist mit II gekennzeichnet. Um die radiale Zentrierung zu verbessern, kann zusätzlich die Außenumfangsfläche 20 der Gelenkkartusche 5 in axialer Richtung 10 bereichsweise konisch ausgebildet werden, was aus den Fig. 15 und 16 ersichtlich ist, die eine modifizierte Ausgestaltung der Gelenkkartusche 5 zeigen. Gemäß der modifizierten Ausgestaltung umfasst die Außenumfangsfläche 20 einen in axialer Richtung 10 konisch verlaufenden Bereich 21, der mit der Umfangskontur 19 während des Einsetzens der Gelenkkartusche 5 in die Gelenkaufnahme 15 zur Anlage gebracht wird. Hierdurch erfolgt eine axiale Sicherung der Gelenkkartusche 5 an dem Strukturbauteil 3, sodass gemäß der modifizierten Ausgestaltung auf den radialen Bund 16 mit der Schulter 17 verzichtet werden kann. Fig. 15 zeigt dabei einen Zustand, in dem die Gelenkkartusche 5 lediglich teilweise in die Gelenkaufnahme 15 eingesetzt ist, wohingegen Fig. 16 einen Zustand zeigt, in dem die Gelenkkartusche 5 vollständig in die Gelenkaufnahme 15 eingesetzt ist.

Nachdem die Gelenkkartusche 5 vollständig in die Gelenkaufnahme 15 des Strukturbauteils 3 eingesetzt ist, wird durch Laserstrahlschweißen die Schweißnaht 18 ausgebildet und danach der Dichtungsbalg 8 auf das Kugelgelenk 2 aufgebracht.

Das Strukturbauteil 3 und die Gelenkkartusche 5 sind vor dem Verschweißen des Strukturbauteils 3 mit der Gelenkkartusche 5 an ihrer Außenseite jeweils mit einer Beschichtung 22 bzw. 23 versehen, wobei die Beschichtung 23 in einem Bereich 24 durch Laserentschichten wieder entfernt wird, bevor die Gelenkkartusche 5 mit dem Strukturbauteil 3 verschweißt wird. Die Beschichtung 23 wird noch vor dem Einsetzen des Kugelzapfens 6 in die Gelenkkartusche 5 auf deren Außenseite aufgebracht, wobei allerdings ein die Gelenkkartuschenöffnung 7 umringender axialer Endbereich 25 der Gelenkkartusche 5 nicht mit der Beschichtung 23 versehen wird. Da der Endbereich 25 nach dem Einsetzen der Lagerschale 12 und der Gelenkkugel 11 umgeformt wird, könnte eine Beschichtung in dem Bereich 25 während des Umformens abplatzen. Ferner wird die Beschichtung 22 auf das Strukturbauteil 3 aufgebracht, bevor die Gelenkaufnahme 15 ausgebildet wird. Nach dem Aufbringen der Beschichtung 22 auf das Strukturbauteil 3 wird die Gelenkaufnahme 15 durch Laserstrahlschneiden in dem Strukturbauteil 3 ausgebildet, wodurch gleichzeitig die Beschichtung 22 in einem die Gelenkaufnahme 15 umringenden Randbereich 26 des Strukturbauteils 3 entfernt wird. Die so vorbereiteten Bauteile 2 und 3 können nun, wie oben beschrieben, ineinander gesteckt werden, wonach die entschichteten Bereiche 24 und 26 durch das Laserstrahlschweißen unter Ausbildung der Schweißnaht 18 fest miteinander verbunden werden. Nach dem Aufsetzen des Dichtungsbalgs 8 sind die Schweißnaht 18, die noch verbleibenden Teile der Bereiche 24 und 26 sowie der Endbereich 25 durch den Dichtungsbalg 8 gegenüber Umwelteinflüssen geschützt.

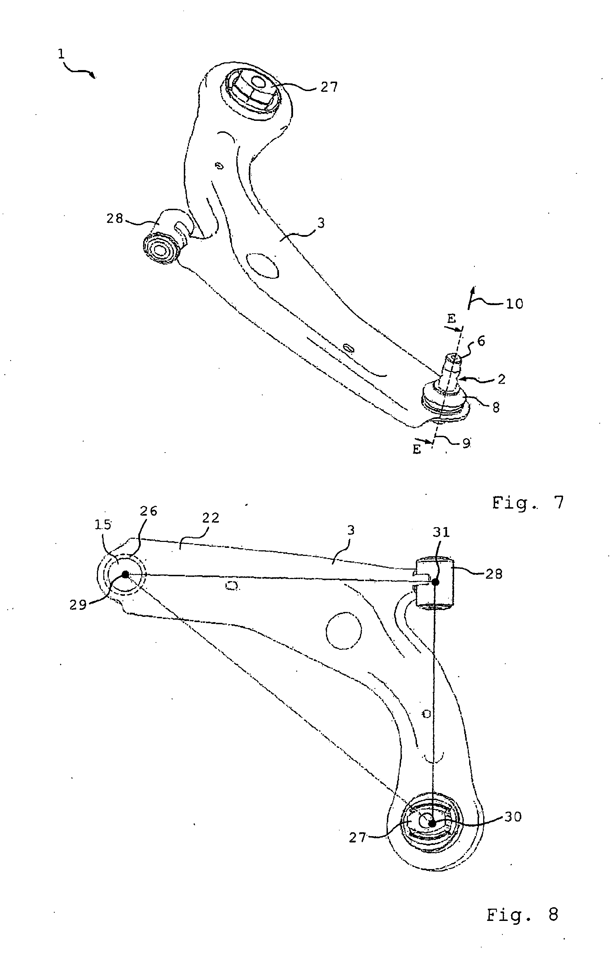

Aus den Fig. 7 bis 13 ist ein Fahrwerkbauteil 1 gemäß einer zweiten Ausführungsform der Erfindung ersichtlich, wobei zu der ersten Ausführungsform ähnliche oder identische Merkmale mit denselben Bezugszeichen wie bei der ersten Ausführungsform bezeichnet sind. Aus Fig. 7 ist eine perspektivische Darstellung des Fahrwerkbauteils 1 ersichtlich, welches als Dreipunktlenker ausgebildet ist und ein Strukturbauteil 3 umfasst. Mit dem Strukturbauteil 3 sind ein Kugelgelenk 2 und zwei Gummilager 27 und 28 fest verbunden, wobei die Lager 27 und 28 vorzugsweise zur Anlenkung des Fahrwerkbauteils 1 an einen Fahrzeugaufbau eines Kraftfahrzeugs dienen. Das Kugelgelenk 2 dient vorzugsweise zur Anlenkung des Fahrwerkbauteils 1 an einen Radträger.

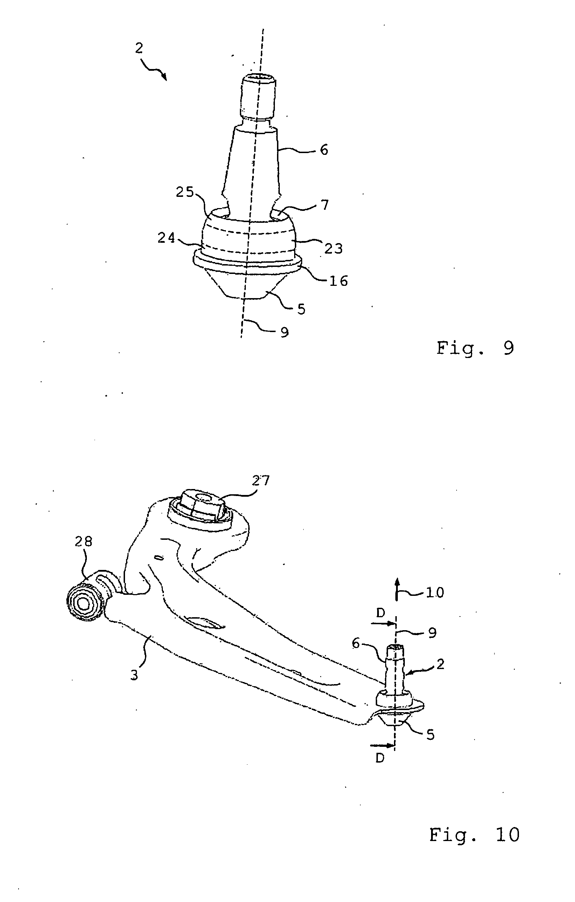

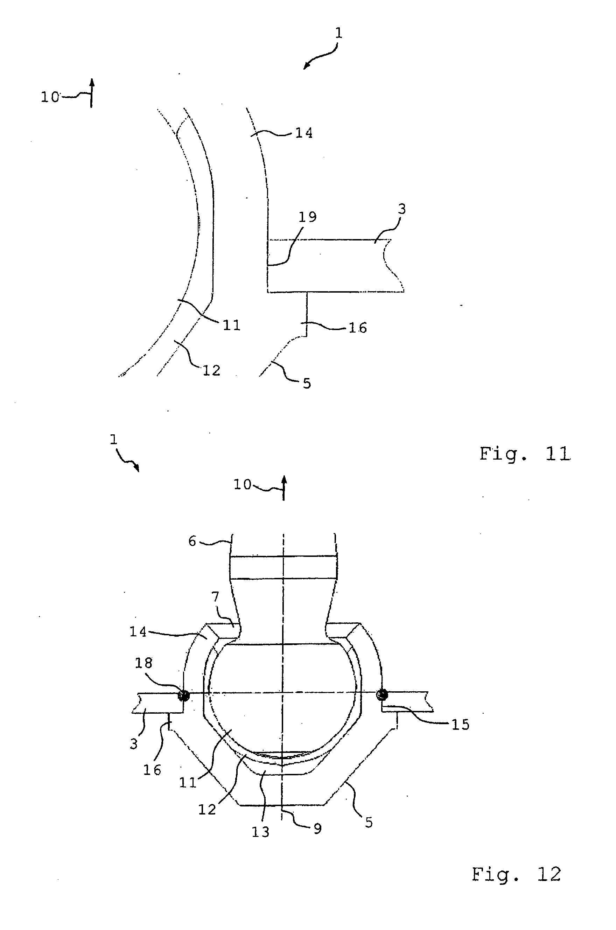

Aus Fig. 8 ist eine Draufsicht auf das Strukturbauteil 3 ersichtlich, wobei die Lager 27 und 28 bereits fest mit dem Strukturbauteil 3 verbunden sind. Ferner ist eine Gelenkaufnahme 15 dargestellt, die als ein sich in einer axialen Richtung 10 durch das Strukturbauteil 3 hindurch erstreckendes Loch ausgebildet ist, in welches das Kugelgelenk 2 eingesetzt wird. Das Einsetzen des Kugelgelenks 2 in die Gelenkaufnahme 15 und das Befestigen des Kugelgelenks 2 an dem Strukturbauteil 3 erfolgen dabei analog zur ersten Ausführungsform, sodass diesbezüglich auf die Beschreibung der ersten Ausführungsform verwiesen wird. Auch wird analog zur ersten Ausführungsform die Gelenkaufnahme 15 durch Laserstrahlschneiden in dem Strukturbauteil 3 ausgebildet. Allerdings erfolgt das Ausbilden der Gelenkaufnahme 15 erst nach dem Verbinden des Strukturbauteils 3 mit den Lagern 27 und 28. Dabei wird der Ort 29, an dem die Gelenkaufnahme 15 ausgebildet wird, in Abhängigkeit von den Positionen 30 und 31 der bereits mit dem Strukturbauteil 3 fest verbundenen Gummilager 27 und 28 bestimmt. Die Positionen 30 und 31 der Gummilager 27 und 28 werden insbesondere durch deren Kinematikpunkte repräsentiert. Ferner repräsentiert der Ort 29 vorzugsweise die Lage des Kinematikpunkts des Kugelgelenks 2 in dem mit dem Strukturbauteil 3 fest verbundenen Zustand. Insbesondere charakterisiert der Ort 29 den Mittelpunkt der Gelenkaufnahme 15. Nachdem der Ort 29 bestimmt worden ist, wird durch Laserstrahlschneiden die Gelenkaufnahme 15 in das Strukturbauteil 3 eingeschnitten, wobei gleichzeitig die Oberflächenbeschichtung 22 des Strukturbauteils 3 in einem die Gelenkaufnahme umringenden Bereich 26 entfernt wird. Danach wird das vorgefertigte und bereichsweise entschichtete Kugelgelenk 2 gemäß Fig. 9 in die Gelenkaufnahme 15 eingesetzt, was aus Fig. 10 ersichtlich ist. Einen Schnitt durch das Kugelgelenk 2 gemäß Fig. 10 entlang der Schnittlinie 9 zeigt Fig. 11. Nach dem Einsetzen des Kugelgelenks 2 in das Loch 15 des Strukturbauteils 3 werden die Gelenkkartusche 5 und das Strukturbauteil 3 in ihren entschichteten Bereichen 24 und 26 unter Ausbildung der Schweißnaht 18 miteinander verschweißt, was aus Fig. 12 ersichtlich ist. Anschließend wird ein Dichtungsbalg 8 auf das Kugelgelenk 2 aufgesetzt, wobei ein Schnitt durch das Kugelgelenk 2 gemäß Fig. 7 entlang der Schnittlinie 9 aus Fig. 13 ersichtlich ist. Zur weiteren Beschreibung des Kugelgelenks 2 und der Verbindung desselben mit dem Strukturbauteil 3 wird auf die Beschreibung der ersten Ausführungsform verwiesen.

### Bezugszeichenliste

- 1: Fahrwerkbauteil
- 2: Kugelgelenk
- 3: Strukturbauteil
- 4: Durchgangsloch in Strukturbauteil
- 5: Gelenkkartusche
- 6: Kugelzapfen
- 7: Gelenkkartuschenöffnung
- 8: Dichtungsbalg
- 9: Längsmittelachse des Kugelgelenks
- 10: axiale Richtung
- 11: Gelenkkugel des Kugelzapfens
- 12: Lagerschale
- 13: Innenraum der Gelenkkartusche
- 14: Wandung der Gelenkkartusche
- 15: Gelenkaufnahme
- 16: umlaufender Bund der Gelenkkartusche
- 17: radiale Schulter
- 18: Schweißnaht
- 19: Umfangskontur der Gelenkaufnahme
- 20: Außenumfangsfläche der Gelenkkartusche
- 21: konischer Bereich der Außenumfangsfläche der Gelenkkartusche
- 22: Oberflächenbeschichtung des Strukturbauteils
- 23: Oberflächenbeschichtung der Gelenkkartusche
- 24: entschichteter Bereich der Gelenkkartusche
- 25: axialer Endbereich der Gelenkkartusche
- 26: entschichteter Bereich des Strukturbauteils
- 27: Gummilager
- 28: Gummilager
- 29: Ort der Lageraufnahe
- 30: Position des Gummilagers
- 31: Position des Gummilagers

## Patentansprüche

1. Verfahren zur Herstellung eines Fahrwerkbauteils, mit den Verfahrensschritten:
- Ausbilden einer Gelenkaufnahme (15) an einem Strukturbauteil (3),
- Einsetzen einer Gelenkkartusche (5) in die Gelenkaufnahme (15),
- Montieren der Gelenkkartusche (5) zu einem Gelenk (2),
- festes Verbinden des Strukturbauteils (3) mit der Gelenkkartusche (5) durch Schweißen,
**dadurch gekennzeichnet, dass**
- der durch das Schweißen gebildete Schweißbereich (18) durch einen Dichtungsbalg (8) abgedeckt wird.

2. Verfahren nach Anspruch 1,
**dadurch gekennzeichnet, dass**
sowohl das Strukturbauteil (3) als auch die Gelenkkartusche (5) an ihrer Außenseite beschichtet werden.

3. Verfahren nach Anspruch 1 oder 2,
**dadurch gekennzeichnet, dass**
die Gelenkkartusche (5) in die Gelenkaufnahme (15) vor dem Schweißen in einer axialen Richtung (10) eingesetzt wird.

4. Verfahren nach Anspruch 3,
**dadurch gekennzeichnet, dass**
die Gelenkaufnahme (15) ein sich durch das Strukturbauteil (3) axial hindurch erstreckendes Loch umfasst oder durch dieses gebildet ist.

5. Verfahren nach Anspruch 3 oder 4,
**dadurch gekennzeichnet, dass**
die Gelenkkartusche (5) eine radiale Schulter (17) aufweist, mit welcher die Gelenkkartusche (5) beim Einsetzen in die Gelenkaufnahme (15) axial an das Strukturbauteil (3) angelegt wird.

6. Verfahren nach einem der Ansprüche 3 bis 5,
**dadurch gekennzeichnet, dass**
die Außenumfangsfläche (20) der Gelenkkartusche (5) zumindest bereichsweise in axialer Richtung (10) sich verjüngend ausgebildet wird.

7. Verfahren nach einem der vorangehenden Ansprüche,
**dadurch gekennzeichnet**, das
die Gelenkkartusche (5) zu dem Gelenk (2) montiert wird, indem ein Gelenkinnenteil in die Gelenkkartusche (5) eingebracht und bewegbar in dieser gelagert wird, wobei sich das Gelenkinnenteil durch eine Gelenkkartuschenöffnung (7) hindurch aus der Gelenkkartusche (5) heraus erstreckt.

8. Verfahren nach Anspruch 7,
**dadurch gekennzeichnet, dass**
das Gelenkinnenteil einen eine Gelenkkugel (11) aufweisenden Kugelzapfen (6) bildet, der mit seiner Gelenkkugel (11) in die Gelenkkartusche (5) eingebracht wird, sodass der Kugelzapfen (6) mit der Gelenkkugel (11) bewegbar in der Gelenkkartusche (5) gelagert wird.

9. Verfahren nach Anspruch 7 oder 8,
**dadurch gekennzeichnet, dass**
sich das Gelenkinnenteil durch den Dichtungsbalg (8) hindurch erstreckt, der die Gelenkkartuschenöffnung (7) abdichtet.

10. Verfahren nach einem der Ansprüche 7 bis 9,
**dadurch gekennzeichnet, dass**
der Dichtungsbalg (8) an dem Gelenkinnenteil dichtend angelegt wird.

11. Verfahren nach einem der vorangehenden Ansprüche,
**dadurch gekennzeichnet, dass**
der Dichtungsbalg (8) an der Gelenkkartusche (5) und/oder an dem Strukturbauteil (3) dichtend angelegt wird.

12. Verfahren nach einem der vorangehenden Ansprüche,
**dadurch gekennzeichnet, dass**
der Dichtungsbalg (8) aus einem flexiblen Material besteht.

13. Fahrwerkbauteil mit
- einem Strukturbauteil (3), an dem eine Gelenkaufnahme (15) ausgebildet ist,
- einer in die Gelenkaufnahme (15) eingesetzten Gelenkkartusche (5), die zu einem Gelenk (2) montiert und durch Schweißen fest mit dem Strukturbauteil (3) verbunden ist,
**dadurch gekennzeichnet, dass**
- der durch das Schweißen gebildete Schweißbereich (18) durch einen Dichtungsbalg (8) abgedeckt ist.

14. Fahrwerkbauteil nach Anspruch 13,
**dadurch gekennzeichnet, dass**
in die Gelenkkartusche (5) ein Gelenkinnenteil eingebracht und bewegbar in dieser gelagert ist, welches sich aus der Gelenkkartusche (5) durch eine Gelenkkartuschenöffnung (7) hindurch heraus erstreckt, die von dem Dichtungsbalg (8) abgedichtet ist.

15. Fahrwerkbauteil nach Anspruch 14,
**dadurch gekennzeichnet, dass**
das Gelenkinnenteil einen eine Gelenkkugel (11) aufweisenden Kugelzapfen (6) bildet, der mit seiner Gelenkkugel (11) in die Gelenkkartusche (5) eingebracht und in dieser bewegbar gelagert ist.

16. Fahrwerkbauteil nach Anspruch 14 oder 15,
**dadurch gekennzeichnet, dass**
sich das Gelenkinnenteil durch den Dichtungsbalg (8) hindurch erstreckt, der an dem Gelenkinnenteil dichtend anliegt.

17. Fahrwerkbauteil nach einem der Ansprüche 13 bis 16,
**dadurch gekennzeichnet, dass**
der Dichtungsbalg (8) an der Gelenkkartusche (5) und/oder an dem Strukturbauteil (3) dichtend anliegt.

## Claims

1. Method for producing a chassis component, having the following method steps:
- formation of a joint socket (15) on a structural component (3),
- insertion of a joint cartridge (5) into the joint socket (15),
- mounting of the joint cartridge (5) to produce a joint (2),
- fixed connection of the structural component (3) to the joint cartridge (5) by way of welding, **characterized in that**
- the welded region (18) which is formed by way of the welding is covered by a sealing bellows (8).

2. Method according to Claim 1, **characterized in that** both the structural component (3) and the joint cartridge (5) are coated on their outer side.

3. Method according to Claim 1 or 2, **characterized in that** the joint cartridge (5) is inserted in an axial direction (10) into the joint socket (15) before the welding.

4. Method according to Claim 3, **characterized in that** the joint socket (15) comprises a hole which extends axially through the structural component (3) or is formed by the said hole.

5. Method according to Claim 3 or 4, **characterized in that** the joint cartridge (5) has a radial shoulder (17), by way of which the joint cartridge (5) is placed axially onto the structural component (3) during the insertion into the joint socket (15).

6. Method according to one of Claims 3 to 5, **characterized in that** the outer circumferential face (20) of the joint cartridge (5) is configured at least in regions so as to taper in the axial direction (10).

7. Method according to one of the preceding claims, **characterized in that** the joint cartridge (5) is mounted to produce the joint (2), by a joint inner part being introduced into the joint cartridge (5) and being mounted movably in the latter, the joint inner part extending through a joint cartridge opening (7) out of the joint cartridge (5).

8. Method according to Claim 7, **characterized in that** the joint inner part forms a ball pivot (6) which has a joint ball (11) and is introduced by way of its joint ball (11) into the joint cartridge (5), with the result that the ball pivot (6) is mounted movably in the joint cartridge (5) by way of the joint ball (11).

9. Method according to Claim 7 or 8, **characterized in that** the joint inner part extends through the sealing bellows (8) which seals the joint cartridge opening (7).

10. Method according to one of Claims 7 to 9, **characterized in that** the sealing bellows (8) is placed sealingly against the joint inner part.

11. Method according to one of the preceding claims, **characterized in that** the sealing bellows (8) is placed sealingly against the joint cartridge (5) and/or against the structural component (3).

12. Method according to one of the preceding claims, **characterized in that** the sealing bellows (8) is composed of a flexible material.

13. Chassis component having
- a structural component (3), on which a joint socket (15) is formed,
- a joint cartridge (5) which is inserted into the joint socket (15), is mounted to produce a joint (2) and is connected fixedly to the structural component (3) by way of welding,
**characterized in that**
- the welded region (18) which is formed by way of the welding is covered by a sealing bellows (8).

14. Chassis component according to Claim 13, **characterized in that** a joint inner part is introduced into the joint cartridge (5) and is mounted movably in the latter, which joint inner part extends out of the joint cartridge (5) through a joint cartridge opening (7) which is sealed by the sealing bellows (8).

15. Chassis component according to Claim 14, **characterized in that** the joint inner part forms a ball pivot (6) which has a joint ball (11), is introduced by way of its joint ball (11) into the joint cartridge (5) and is mounted movably in the latter.

16. Chassis component according to Claim 14 or 15, **characterized in that** the joint inner part extends through the sealing bellows (8) which bears sealingly against the joint inner part.

17. Chassis component according to one of Claims 13 to 16, **characterized in that** the sealing bellows (8) bears sealingly against the joint cartridge (5) and/or against the structural component (3).

## Revendications

1. Procédé de fabrication d'un élément de châssis, comprenant les étapes de procédé suivantes :
- réalisation d'une cavité d'articulation (15) au niveau d'un élément structurel (3),
- insertion d'une cartouche d'articulation (5) dans la cavité d'articulation (15),
- montage de la cartouche d'articulation (5) de manière à former une articulation (2),
- connexion fixe de l'élément structurel (3) à la cartouche d'articulation (5) par soudage,
**caractérisé en ce que**
- la zone de soudure (18) formée par le soudage est recouverte par un soufflet d'étanchéité (8).

2. Procédé selon la revendication 1,
**caractérisé en ce que**
l'élément structurel (3) ainsi que la cartouche d'articulation (5) sont revêtus sur leur côté extérieur.

3. Procédé selon la revendication 1 ou 2,
**caractérisé en ce que**
la cartouche d'articulation (5) est insérée dans une direction axiale (10) dans la cavité d'articulation (15) avant le soudage.

4. Procédé selon la revendication 3,
**caractérisé en ce que**
la cavité d'articulation (15) comprend un trou s'étendant axialement à travers l'élément structurel (3) ou est formée par celui-ci.

5. Procédé selon la revendication 3 ou 4,
**caractérisé en ce que**
la cartouche d'articulation (5) présente un épaulement radial (17) avec lequel la cartouche d'articulation (5) est appliquée axialement contre l'élément structurel (3) lors de l'insertion dans la cavité d'articulation (15).

6. Procédé selon l'une quelconque des revendications 3 à 5,
**caractérisé en ce que**
la surface périphérique extérieure (20) de la cartouche d'articulation (5) est réalisée en se rétrécissant au moins en partie dans la direction axiale (10).

7. Procédé selon l'une quelconque des revendications précédentes,
**caractérisé en ce que**
la cartouche d'articulation (5) est montée de manière à former l'articulation (2) en introduisant une partie intérieure d'articulation dans la cartouche d'articulation (5) et en la supportant de manière déplaçable dans celle-ci, la partie intérieure d'articulation s'étendant à travers une ouverture de la cartouche d'articulation (7) hors de la cartouche d'articulation (5).

8. Procédé selon la revendication 7,
**caractérisé en ce que**
la partie intérieure d'articulation forme un tourillon sphérique (6) présentant une rotule d'articulation (11) qui est introduit avec sa rotule d'articulation (11) dans la cartouche d'articulation (5), de telle sorte que le tourillon sphérique (6) soit supporté avec la rotule d'articulation (11) de manière déplaçable dans la cartouche d'articulation (5).

9. Procédé selon la revendication 7 ou 8,
**caractérisé en ce que**
la partie intérieure d'articulation s'étend à travers le soufflet d'étanchéité (8) qui ferme de manière hermétique l'ouverture de la cartouche d'articulation (7).

10. Procédé selon l'une quelconque des revendications 7 à 9,
**caractérisé en ce que**
le soufflet d'étanchéité (8) est appliqué de manière hermétique contre la partie intérieure d'articulation.

11. Procédé selon l'une quelconque des revendications précédentes,
**caractérisé en ce que**
le soufflet d'étanchéité (8) est appliqué de manière hermétique contre la cartouche d'articulation (5) et/ou contre l'élément structurel (3).

12. Procédé selon l'une quelconque des revendications précédentes,
**caractérisé en ce que**
le soufflet d'étanchéité (8) se compose d'un matériau flexible.

13. Élément de châssis comprenant
- un élément structurel (3) sur lequel est réalisée une cavité d'articulation (15),
- une cartouche d'articulation (5) insérée dans la cavité d'articulation (15), laquelle est montée de manière à former une articulation (2) et est connectée fixement à l'élément structurel (3) par soudage,
**caractérisé en ce que**
- la zone de soudure (18) formée par le soudage est recouverte par un soufflet d'étanchéité (8).

14. Élément de châssis selon la revendication 13,
**caractérisé en ce**
**qu'**une partie intérieure d'articulation est introduite dans la cartouche d'articulation (5) et est supportée de manière déplaçable dans celle-ci, laquelle s'étend à travers une ouverture de la cartouche d'articulation (7) hors de la cartouche d'articulation (5), l'ouverture de la cartouche d'articulation étant fermée de manière hermétique par le soufflet d'étanchéité (8).

15. Élément de châssis selon la revendication 14,
**caractérisé en ce que**
la partie intérieure d'articulation forme un tourillon sphérique (6) présentant une rotule d'articulation (11), qui est introduit avec sa rotule d'articulation (11) dans la cartouche d'articulation (5), et qui est supporté de manière déplaçable dans celle-ci.

16. Élément de châssis selon la revendication 14 ou 15,
**caractérisé en ce que**
la partie intérieure d'articulation s'étend à travers le soufflet d'étanchéité (8) qui s'applique de manière hermétique contre la partie intérieure d'articulation.

17. Élément de châssis selon l'une quelconque des revendications 13 à 16,
**caractérisé en ce que**
le soufflet d'étanchéité (8) s'applique de manière hermétique contre la cartouche d'articulation (5) et/ou contre l'élément structurel (3).
